(19) Europäisches Patentamt
European Patent Office
Office européen des brevets

(11) Veröffentlichungsnummer: **0 189 073 B1**

(12) **EUROPÄISCHE PATENTSCHRIFT**

(45) Veröffentlichungstag der Patentschrift: **01.08.90**

(51) Int. Cl.[5]: **C 08 G 63/18**, C 08 J 5/18

(21) Anmeldenummer: **86100293.9**

(22) Anmeldetag: **11.01.86**

# (54) Thermotrope aromatische Polyester mit hoher thermischer Stabilität, Verfahren zu ihrer Herstellung und ihre Verwendung zur Herstellung von Formkörpern, Filamenten, Fasern und Folien.

(30) Priorität: **25.01.85 DE 3502378**

(43) Veröffentlichungstag der Anmeldung:
**30.07.86 Patentblatt 86/31**

(45) Bekanntmachung des Hinweises auf die Patenterteilung:
**01.08.90 Patentblatt 90/31**

(84) Benannte Vertragsstaaten:
**DE FR GB IT**

(56) Entgegenhaltungen:
**FR-A-2 339 637**
**GB-A- 863 704**
**US-A-3 948 856**

(73) Patentinhaber: **BAYER AG**
**D-5090 Leverkusen 1 Bayerwerk (DE)**

(72) Erfinder: **Eckhardt, Volker, Dr.**
**Bodelschwinghstrasse 14**
**D-4150 Krefeld (DE)**
Erfinder: **Dicke, Hans-Rudolf, Dr.**
**Bodelschwinghstrasse 16**
**D-4150 Krefeld (DE)**
Erfinder: **Bottenbruch, Ludwig, Dr.**
**Wöhlerstrasse 5**
**D-4150 Krefeld 1 (DE)**
Erfinder: **Freitag, Dieter, Dr.**
**Hasenheide 10**
**D-4150 Krefeld (DE)**
Erfinder: **Biskup, Ulrich, Dr.**
**Morgengraben 14**
**D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 189 073 B1

Courier Press, Leamington Spa, England.

**Beschreibung**

Die Erfindung betrifft hochmolekulare thermotrope aromatische Polyester mit hoher Wärmeformbeständigkeit, hoher thermischer Stabilität und guter Verarbeitbarkeit, ein Verfahren zur Herstellung dieser Polyester sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind hinreichend bekannt, vergleiche z.B.

F. E. McFarlane et al., Liquid Crystal Polymers II, Contemporary Topics in Polymer Science, Vol. 2, Plenum Publishing Corporation, 1977;

W. J. Jackson und H. F. Kuhfuss, J. Polymer Science, Polymer Chem. Ed. *14*, 2042 (1976);

W. C. Wooten et al. in A. Ciferri "Ultra-high Modulus Polymers", Applied Science Publ., London 1979, S. 362 f.;

A. Blumstein et al., "Liquid Crystalline Order in Polymers", Academic Press 1978;

J. Preston, Angew. Makromol. Chem. 109/110, 1—19 (1982);

A. Ciferri, W. R. Krigbaum, R. B. Meyer "Polymer Liquid Crystals", Academic Press, New York, 1982;

EP—A 1185, 8855, 15 856, 17 310, 18 145, 18 709, 22 344, 44 205, 49 615;

US—PS 3 991 013, 3 991 014, 4 066 620, 4 083 829, 4 107 143;

WO 79/797, 79/1030, 79/1040.

Der flüssigkristalline Zustand von Polymerschmelzen läßt sich mit Hilfe eines Polarisationsmikroskops untersuchen: für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicholschen Prismen in Abwesenheit einer Materialprobe auf 100 Skalenteile eingestellt. Bei gekreuzten Nicokschen Prismen ergab sich dann ein Wert von 0,01 Skalenteilen.

Die Schichtdicke der untersuchten Polyesterschmelzen betrug 100 µm.

Die Untersuchung der Polyester erfolgte nach dem Aufschmelzen der Proben bei Temperaturen zwischen 200 und 400°C. Sofern in diesem gesamten Bereich oder in einem Teil davon eine Aufhellung der zwischen den gekreuzten Nicolschen Prismen beobachteten Schmelze auftrat, wurde der Polyester als thermotrop flüssigkristallin eingestuft.

Die flüssigkristallinen Polyester zeigen in der Meßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteil gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G. W. Gray und P. A. Windsor, "Plastic Crystals, Physico-Chemical Properties and Methods of Investigation", insbesondere Chapter 3, John Wiley & Sons, New York, Sydney, Toronto, 1974 beschrieben ist.

Aus thermotropen Polyestern lassen sich durch thermoplastische Verformung Formkörper und Folien sowie durch Verspinnen aus der Schmelze Fasern mit außergewöhnlichen mechanischen Eigenschaften herstellen. Voraussetzung ist jedoch, daß die Polyester unzersetzt schmelzbar sind. Wünschenswert ist weiterhin eine hinreichend niedrige Schmelztemperatur, um eine thermoplastische Verarbeitung auf den zur Verfügung stehenden Maschinen zu ermöglichen. Die einfachsten voll-aromatischen Polyester, wie z.B. Poly-(4-hydroxybenzoat) und Poly-(1,4-phenylenterephthalat) erfüllen diese Voraussetzungen nicht: Sie schmelzen unter Zersetzung erst bei etwa 600°C.

Thermotrope Polyester aus drei oder mehr Monomeren können thermoplastisch verarbeitet werden (DE—OS 27 04 315, 27 21 786, 27 51 653, 28 34 537, 28 44 817, 29 32 178, 29 63 833, EP—A 1340 30 182, 69 587, US—PS 41 53 779, 42 45 082, 42 79 803, 43 55 134, 43 71 660, 43 91 966). Allen diesen Produkten ist jedoch gemeinsam, daß mit der erwünschten Erniedrigung des Schmelzpunktes auch eine unerwünschte Verminderung der Wärmeformbeständigkeit eintritt. In manchen Fällen läßt sich die Wärmeformbeständigkeit durch eine thermische Nachbehandlung der aus diesen thermotropen Copolyestern hergestellten Fasern, Folien oder Formkörper erhöhen. Die thermische Nachbehandlung ist jedoch aufwendig und damit unwirtschaftlich.

Andere thermotrope Polyester, die aliphatische Struktureinheiten enthalten (DE—OS 27 24 700, 27 24 738, EP—A 10 051, 11 640, US—PS 37 78 410, 38 04 805, 38 90 256), sind zwar thermoplastisch verarbeitbar, doch wird dies durch einen Rückgang der Wärmeformbeständigkeit erkauft. In den meisten Fällen befriedigt die thermische Stabilität der Produkte nicht; außerdem können bei der Verarbeitung Abbaureaktionen auftreten.

Aufgabe der Erfindung war es, thermotrope Polyester mit hoher Wärmeformbeständigkeit, hoher thermischer Belastbarkeit und guter Verarbeitbarkeit bereitzustellen.

Die Wärmeformbeständigkeit (ohne thermische Nachbehandlung) sollte in der Regel mindestens 150°C, vorzugsweise mindestens 200°C (jeweils gemessen nach Vicat B, DIN 53 460, ISO 306) betragen.

Die thermische Stabilität sollte bei isothermischer gravimetrischer Analyse (30 Minuten/350°C) einem

Gewichtsverlust von höchstens 3, vorzugsweise höchstens 2 und insbesondere höchstens 1 Gew.-% entsprechen.

Die durch DSC bestimmte Temperatur des Übergangs aus der kristallinen in die flüssig-kristalline Phase (Schmelzpunkt) sollte unter 370°C, vorzugsweise unter 340°C und insbesondere unter 300°C liegen.

Überraschenderweise wurde gefunden, daß thermotrope Polyester die gewünschte Kombination vorteilhafter Eigenschaften dann besitzen, wenn ihre Diphenolreste überwiegend oder allein aus Bis-α,ω-(4-hydroxyphenyl)-$C_3$—$C_{12}$-n-alkanresten bestehen.

Gegenstand der Erfindung sind also thermotrope Polyester aus aromatischen Dicarbonsäureresten, Diphenolresten, gegebenenfalls Resten von Kettenabbrechern und/oder Verzweigungsmitteln, dadurch gekennzeichnet, daß die Diphenolreste zu mindestens 90 Mol-%, vorzugsweise zu mindestens 95 Mol-%, insbesondere zu mindestens 98 Mol-% der Formel

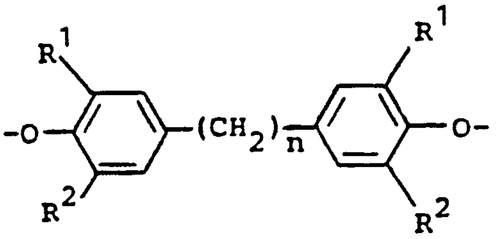 (I)

entsprechen, worin

$R^1$, $R^2$ für Wasserstoff, $C_1$—$C_4$-Alkyl, $C_1$—$C_4$-Alkoxy, Phenyl oder Halogen (vorzugweise Chlor oder Brom) und

n für eine ganze Zahl von 3 bis 12 stehen.

Besonders bevorzugte Polyester enthalten als Diphenolreste allein Reste der Formel I.

Bevorzugte aromatische Dicarbonsäuren enthalten 8 bis 24, insbesondere 8 bis 16 C-Atome. Zu ihnen zählen beispielsweise 4,4'-Biphenyldicarbonsäure, 4,4'-Stilbendicarbonsäure, 4,4'-Tolandicarbonsäure, 4,4'-Azobenzoldicarbonsäure, 2,6-Naphthalindicarbonsäure, 1,4-Naphthalindicarbonsäure sowie 1,5-Naphthalindicarbonsäure, insbesondere aber Terephthalsäure. Besonders bevorzugte aromatische Dicarbonsäuren tragen die beiden Carboxylgruppen an coaxialen oder parallelen entgegengesetzten Bindungen.

Bevorzugte Diphenols sind beispielsweise Bis-1,3-(4-hydroxyphenyl)-n-propan, Bis-1,4-(4-hydroxyphenyl)-n-butan, Bis-1,5-(4-hydroxyphenyl)-n-pentan, Bis-1,6-(4-hydroxyphenyl)-n-hexan, Bis-1,7-(4-hydroxyphenyl)-n-heptan, Bis-1,8-(4-hydroxyphenyl)-n-octan, Bis-1,9-(4-hydroxyphenyl-n-nonan, Bis-1,10-(4-hydroxyphenyl)-n-decan, Bis-1,11-(4-hydroxyphenyl)-n-undecan, Bis-1,12-(4-hydroxyphenyl)-n-dodecan; Bis-1,3-(3,5-dichlor-4-hydroxyphenyl)-n-propan, Bis-1,4-(3,5-dichlor-4-hydroxyphenyl)-n-butan, Bis-1,5-(3,5-dichor-4-hydroxyphenyl)-n-pentan, Bis-1,6-(3,5-dichlor-4-hydroxyphenyl)-n-hexan, Bis-1,7-(3,5-dichlor-4-hydroxyphenyl)-n-heptan, Bis-1,8-(3,5-dichlor-4-hydroxyphenyl)-n-octan, Bis-1,9-(3,5-dichlor-4-hydroxyphenyl)-n-nonan, Bis-1,10-(3,5-dichlor-4-hydroxyphenyl)-n-decan, Bis-1,11-(3,5-dichlor-4-hydroxyphenyl)-n-undecan, Bis-1,12-(3,5-dichlor-4-hydroxyphenyl)-dodecan; Bis-1,3-(3,5-dimethyl-4-hydroxyphenyl)-n-propan, Bis-1,4-(3,5-dimethyl-4-hydroxyphenyl)-n-butan, Bis-1,5-(3,5-dimethyl-4-hydroxyphenyl)-n-pentan, Bis-1,6-(3,5-dimethyl-4-hydroxyphenyl)-n-hexan, Bis-1,7-(3,5-dimethyl-4-hydroxyphenyl)-n-heptan, Bis-1,8-(3,5-dimethyl-4-hydroxyphenyl)-n-octan, Bis-1,9-(3,5-dimethyl-4-hydroxyphenyl)-n-nonan, Bis-1,10-(3,5-dimethyl-4-hydroxyphenyl)-n-decan, Bis-1,11-(3,5-dimethyl-4-hydroxyphenyl)-n-undecan und Bis-1,12-(3,5-dimethyl-4-hydroxyphenyl)-dodecan.

Besonders bevorzugte Diphenole sind diejenigen Verbindungen, in denen sowohl $R^1$ als auch $R^2$ Wasserstoff bedeuten.

Die besten Polyester sind solche, deren Dicarbonsäure- und Diphenolreste jeweils nur aus einer Komponente bestehen, also Homopolyester. Die erfindungsgemäßen Polyester können jedoch auch mehr als eine Dicarbonsäurekomponente und/oder mehr als eine Diphenolkomponente — vorzugsweise aus den oben definierten Dicarbonsäuren und Diphenolen ausgewählt — enthalten. Sie können jedoch auch Reste anderer Dicarbonsäuren, wie z.B. aliphatische $C_4$—$C_{14}$-Dicarbonsäuren (Bernstein-, Adipin-, Sebacinsäure), bzw. Reste anderer Diphenole, wie z.B. Reste von Bisphenol-A, o.o.o.'.o'.-Tetramethyl-, -chlor-, -brombisphenol-A, Hydrochinon, 4.4'-Dihydroxydiphenyl, 4.4'-Dihydroxydiphenylether, 2.6-Dihydroxynaphthalin, oder auch Reste von Hydroxycarbonsäuren, wie z.B. von p-Hydroxybenzoesäure enthalten. In solchen Fällen empfiehlt es sich jedoch im Interesse einer hohen Wärmeformbeständigkeit, die Co-komponenten (Verzweigungsittel und Kettenabbrecher ausgenommen) auf maximal 10 Mol-%, vorzugsweise auf maximal 5 mol-%, insbesondere auf maximal 2 Mol-%, jeweils bezogen auf Dicarbonsäurekomponente, zu begrenzen.

Die erfindungsgemäßen Polyester können bis zu 10 Mol-% Carbonatgruppen, bezogen auf die Summe von Ester- und Carbonatgruppen, enthalten.

Als Endgruppen können die erfindungsgemäßen Polyester —COOH, —OH, —$OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, β-Naphthol und aromatische Monocarbonsäuren, wie Benzoesäure, Diphenylcarbonsäuren

und Naphthalincarbonsäuren. Kettenabbrecher können in Mengen von 0,5—5 Mol-%, bei Monohydroxylverbindungen bezogen auf Diphenole, bei Monocarbonsäuren bezogen auf Dicarbonsäuren, eingesetzt werden.

Als Verzweigungsmittel können drei- oder höherfunktionelle, vorzugsweise drei- und vierfunktionelle — vorzugsweise aromatische — Monomere, wie z.B. Phloroglucin, 1.3.5-Benzoltricarbonsäure oder 3.5-Dihydroxybenzoesäure, in Mengen von 0.1 bis 1 Mol-%, bei Polyhydroxylverbindungen bezogen auf Diphenole, bei Poly- und Hydroxycarbonsäuren bezogen auf Dicarbonsäuren, eingesetzt werden.

Die erfindungsgemäßen Polyester sind in den von uns erprobten Lösungsmitteln, wie z.B. p-Chlorphenol, Dichlormethan/Trifluoressigsäure (3:1 Gewichtsteile) und Phenol/Tetrachlorethan (1:1 Gewichtsteile) unlöslich.

Die Schmelzviskosität der erfindungsgemäßen Polyester, gemessen 20°C unterhalb der Klärtemperatur (d.h. des DSC-bestimmten Übergangs aus der flüssig-kristallinen in die isotrope Phase), höchstens jedoch bei 380°C, unter Verwendung einer Düse mit einem Länge/Durchmesser-Verhältnis von 20 bei einer schergeschwindigkeit von $10^3$ $sec^{-1}$, beträgt in der Regel 2 bis 2 000, vorzugsweise 5 bis 1000, insbesondere 10 bis 500 Pa.s.

Die erfindungsgemäßen Polyester weisen eine hohe thermische Beständigkeit auf. Bei isothermer gravimetrischer Analyse unter Stickstoffatmosphäre mit einem Perkin-Elmer TGS 2-Gerät wird nach 30 Minuten bei 350°C an allen erfindungsgemäßen Polyestern ein Gewichtsverlust von weniger als 2,5 Gew.-% festgestellt. Viele der erfindungsgemäßen Polyester weisen unter diesen Bedingungen einen Gewichtsverlust von weniger als 1 Gew.-% auf. Eine Verfärbung wird nicht beobachtet.

Nierdermolekulare flüssigkristalle Verbindungen gehen bei der sogenannten Klärtemperatur aus der geordneten flüssigkristallinen Schmelze indie ungeordnete isotrope Schmelze über. Dieser Phasenübergang kann jedoch bei den meisten flüssigkristallinen Polymeren aufgrund ihrer hohen Klärtemperatur und ihrer begrenzten thermischen Stabilität nicht ohne Zersetzungserscheinungen erfolgen.

Einige der Erfindungsgemäßen Polyester, die eine Klärtemperatur unterhalb von 400°C besitzen, können unzersetzt in die isotrope Phase überführt werden. Bei mikroskopischer Beobachtung äußert sich dieser Übergang in einem Verschwinden des Aufhellungseffektes beim Überschreiten der Klärtemperatur. Das Schmelzverhälten kann nach Abkühlung erneut reproduziert werden, ist also nicht von einem Abbau begleitet. Die erfindungsgemäßen Polyester mit einer Klärtemperatur von weniger als 400°C können also auch aus der isotropen Schmelze verarbeitet werden.

Ein weiterer Vorteil der erfindungsgemäßen Polyester ist ihre schnelle Kristallisation beim Abkühlen aus der Schmelze. Bei Untersuchungen mit Differential-Scanning-Calorimetry (DSC) werden bei einer Sequenz von Aufheizung/Abkühlung/Aufheizung mit jeweils 40°C/Minute in erster und zweiter Aufheizung nahezu die gleichen Schmelzenthalpien gefunden. Bei der Verarbeitung der erfindungsgemäßen thermotropen Polyester ist demnach eine aufwendige thermische Nachbehandlung nach dem Verformungsvorgang zur Erhöhung der Kristallinität nicht erforderlich.

Die erfindungsgemäßen Polyester können durch Umsetzung der Diphenole oder ihrer reaktionsfähigen Derivate, z.B. ihrer $C_1$—$C_3$-Acylderivate, vorzugsweise ihrer Acetate, mit den Dicarbonsäuren oder ihren reaktionsfähigen Derivate, z.B. ihrer Dihalogenide oder Diester, vorzugsweise ihrer Dichloride, Dimethyl- oder Diphenylester, gegebenenfalls in Gegenwart von Verzweigungsmitteln, Kettenabbrechern und/oder Katalysatoren, nach verschiedenen Verfahren hergestellt werden. Zur Erzeugung von Carbonatgruppen wird in der Regel Diphenylcarbonat eingesetzt.

Die erfindungsgemäßen Polyester können bei Temperaturen von 160°C bis 370°C hergestellt werden, wobei man im allgemeinen die Reaktion bei niedrigen Temperaturen beginnt und im Verlaufe des Reaktionsfortschritts kontinuierlich die Temperatur erhöht. Bei nachlassender Reaktionsgeschwindigkeit kann ein Vakuum angelegt werden, wobei der Druck vorzugsweise von Normaldruck bis auf ca. 0,1 mbar gesenkt wird.

Nach einem bevorzugten Verfahren werden die Diphenoldiacetate, die auch in situ erzeugt werden können, mit den Dicarbonsäuren bei Temperaturen von 160 bis 370°C, gegebenenfalls unter vermindertem Druck, umgesetzt.

Nach einem anderen bevorzugten Verfahren werden die Dicarbonsäurediester mit den Diphenolen bei Temperaturen von 250 bis 370°C und einem Druck von 0.1 bis 1000 mbar umgesetzt.

Die Ausgangsverbindungen werden in der Regel in solchen Mengen eingesetzt, daß Carboxyl- zu Hydroxylfunktionen in einem Verhältnis von 0.95 bis 1.05, vorzugsweise 0.98 bis 1.02, stehen.

Die Reaktionen können in der Schmelze oder in inerten hochsiedenden Lösungsmitteln durchgeführt werden.

Bevorzugte Katalysatoren für die Polykondensation sind Lewis-Säuren und Halogenwasserstoffsäuren; Oxide, Hydride, Hydroxide, Halogenide, Alkoholate, Phenolate, Salze anorganischer oder organischer Säuren (vorzugsweise Carbonsäuresalze), Komplexsalze oder Mischsalze der Erdalkalimetalle, wie z.B. Magnesium, Calcium; der Nebengruppenelemente, wie z.B. Vanadium, Titan, Mangan, Cobalt, Nickel, Zink, Lanthan, Cer, Zirkonium oder der Elemente aus anderen Gruppen des Periodensystems, wie z.B. Germanium, Zinn, Blei und Antimon oder auch die Alkalimetalle oder Erdalkalimetalle selbst, insbesondere Natrium, Natriumhydroxid, Lithiumacetat, Magnesiumacetat, Cobaltacetat, Zinkacetat, Calciumbenzoat, Magnesiumacetonat, Zinkacetylacetonat, Vanadyl-$C_1$—$C_8$-alkoxide, Titanalkoxide, wie

Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butyl-zinn-diacetat, Di-butyl-dimethoxy-zinn. Besonders bevorzugt sind Magnesium-, Mangan-, Natrium-, Kalium- und Zinkacetat, Titantetrabutylat, Titantetrapropylat sowie Natriumphenolat. Die Katalysatormengen betragen vorzugsweise 0.001 bis 1 Gew.-%, insbesondere 0.01 bis 0.2 Gew.-%, bezogen auf das Gesamtgewicht der eingesetzten Monomeren.

Die erfindungsgemäßen thermotropen Polyester können infolge ihrer irelativ geringen Schmelzviskosität und ihrer niedrigen Schmelztemperatur vorteilhaft thermoplastisch zu Spritzgußteilen, Filamenten, Fasern, Bändern und Filmen verarbeitet werden. Durch die hierbei auftretenden Scherkräfte wird eine Molekülorientierung erzielt, die in hohem Maße von der Stärke dieser Kräfte beeinflußt wird. Des weiteren zeigen sie eine ausgeprägte Strukturviskosität, d.h. daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, oher Wärmeformbeständigkeit und großer Dimensionsstabilität hergestellt werden. Da die Polyester außerordentlich chemikalienresistent und flammwidrig sind, eignen sie sich bevorzugt zur Herstellung von:

— elektrotechnischen Artikeln, wie z.B. Isolatoren, gedruckten Schaltungen, Steckkontakten, Armaturenteilen, Umhüllungen von integrierten Schaltungen,

— Teilen chemisch-technischer Apparate, wie z.B. Rohren, Behälterauskleidungen, Rotoren, Gleitlagern, Dichtungen,

— Teilen der Flugzeuginnenausstattung,

— Teilen medizinisch-technischer Geräte, wie z.B. Bauteilen von Klimaanlagen, Ventilteilen.

Die erfindungsgemäßen Polyester können aber auch als Überzugs- und Beschichtungsmaterial (pulverförmig oder dispergiert) verwendet werden. Auch zur Herstellung verstärkter oder gefüllter Formmassen mit einem Verstärker-bzw. Füllstoffgehalt von 5 bis 65 Gew.-%, bezogen auf verstärkte oder gefüllte Formmasse, sind sie bestens geeignet.

Weiterer Gegenstand der Erfindung ist also die Verwendung der neuen Polyester zur Herstellung von Formkörpern, Filamenten, Fasern und Filmen.

Die Prozentangaben der nachfolgenden Beispiele beziehen sich jeweils auf das Gewicht.

## Beispiele

Die Messung der Wärmeformbeständigkeit erfolgte durch Bestimmung der Vicat-B-Erweichungstemperatur gemäß DIN 53 460 (ISO 306).

### Beispiel 1

In eine mit Stickstoff gespülte und ausgeheizte Schmelzkondensationsapparatur, bestehend aus einem 250-ml-Planschliffgefäß mit Planschliffdeckel, Rührer, Stickstoffeinleitung und Destillationsaufsatz, wurden folgende Substanzen eingewogen:

0,32 Mol ≙ 86,5 g 1,6-Bis-(4-hydroxyphenyl)-n-hexan,
0,32 Mol ≙ 101,9 g Terephthalsäurediphenylester und
0,2 g Titantetraisopropylatlösung in Chlorbenzol (1 %ig).

Unter leichtem Stickstoffstrom wurde die Reaktionsmischung mittel Salzbad bei 240°C aufgeschmolzen und durch Erhöhung der Temperatur auf 270°C und Verminderung des Druckes auf 250 mbar die Phenolabspaltung in Gang gesetzt. Über einen Zeitraum von 3,5 Stunden wurde durch allmähliche Erhöhung der Temperatur bis auf 330°C und Verminderung des Druckes bis auf 20 mbar Phenol abdestilliert, wobei sich die zunächst klare Schmelze eintrübte. Die Destillatmenge betrug zu diesem Zeitpunkt 54,2 g (≙ 90% der Theorie). Durch weitere Erniedrigung des Druckes bis auf 0,1 mbar wurde die Phenolabspaltung innerhalb von 30 Minuten zu Ende geführt (Gesamtdestillatmenge: 59,0 g ≙ 98% der Theorie).

Schließlich wurde die Temperatur nochmals für 2 Stunden auf 340°C erhöht.

Es wurde ein hellbeiger Polyester erhalten.

Unter dem Polarisationsmikroskop wurde eine anisotrope Schmelze im Bereich zwischen 320 und 400°C beobachtet. Oberhalb 400°C lag eine isotrope Schmelze vor.

Bei einer Serie von Aufheizung/Abkühlung/Aufheizung mit jeweils 40°C/Minute wurde in DSC-Untersuchungen eine Gesamtschmelzwärme von 8,3 cal/g bei der ersten Aufheizung und 7,9 cal/g bei der zweiten Aufheizung bestimmt. Der Polyester kristallisierte also sehr rasch.

Die Erweichungstemperatur des Polyesters (gemessen nach Vicat B) betrug 205°C.

Die thermogravimetrische Analyse ergab bei konstanter Temperatur von 350°C nach 30 Minuten einen Gewichtsverlust von 0,9%.

### Beispiel 2

In die im Beispiel 1 beschriebene Reaktionsapparatur wurden die folgenden Substanzen eingewogen:

0,32 Mol ≙ 104,5 g 1,10-Bis-(4-hydroxyphenyl)-n-decan,
0,32 Mol ≙ 101,9 g Terephthalsäurediphenylester und
0,2 g Titantetraisopropylatlösung in Chlorbenzol (1 %ig).

Mit der Ausnahme, daß die Endtemperatur 350°C betrug, wurden die gleichen Reaktionsbedingungen wie in Beispiel 1 eingehalten. Hierbei destillierten insgesamt 57,8 g (≙ 96% der Theorie) Phenol ab. Der erhaltene Polyester bildete gegen Ende der Reaktion eine stark viskose Schmelze, die beim Abkühlen rasch zu einer hellbeigen Masse erstarrte.

Unter dem Polarisationsmikroskop wurde eine anisotrope Phase im Bereich von 275 bis 305°C beobachtet. Oberhalb 305°C war die Schmelze optisch isotrop.

DSC-Messungen ergaben bei einer Serie von Aufheizung/Abkühlung/Aufheizung mit jeweils 40°C/Minute Gesamtschmelzenthalpien von 6,8 g cal/g bei der ersten Aufheizung und 6,5 cal/g bei der zweiten Aufheizung. Der Polyester besaß also eine hohe Kristallisationsgeschwindigkeit.

Die Erweichungstemperatur des Polyesters (gemessen nach Vicat B) betrug 165°C.

Bei einer konstanten Temperatur von 350°C erlitt der Polyester innerhalb von 30 Minuten einen Gewichtsverlust von 2,2%.

Beispiel 3

In die in Beispiel 1 beschriebene Reaktionsapparatur wurden die folgenden Substanzen eingewogen:

0,32 Mol ≙ 95,5 g 1,8-Bis-(4-hydroxyphenyl)-n-octan,
0,32 Mol ≙ 101,9 g Terephthalsäurediphenylester und
0,2 g Titantetraisopropylatlösung in Chlorbenzol (1 %ig).

Unter Einhaltung der in Beispiel 1 dargestellten Reaktionsbedingungen wurden 58,1 g (≙ 96,5% der Theorie) Phenol abgespalten. Bei einer Endtemperatur von 340°C bildete sich eine trübe, niedrigviskose Schmelze aus, die beim Abkühlen schnell zu einer beigen Masse erstarrte.

Durch Differential-Scanning-Calorimetry (DSC) und Polarisationsmikroskopie wurde eine anisotrope Phase im Temperaturbereich von 298 bis 355°C nachgewiesen. Oberhalb dieser Temperatur lag eine isotrope Schmelze vor.

Die Erweichungstemperatur des Polyesters (gemessen nach Vicat B) lag bei 182°C.

Bei konstanter Untersuchungstemperatur von 350°C erlitt der Polyester innerhalb von 30 Minuten einen Gewichtsverlust von 1,3%.

Beispiel 4

In die in Beispiel 1 beschriebene Reaktionsapparatur wurden die folgenden Substanzen eingewogen:

0,45 Mol ≙ 121,7 g 1,6-Bis-(4-hydroxyphenyl)-n-hexan
0,45 Mol ≙ 74,8 g Terephthalsäure,
1,08 Mol ≙ 110,3 g Acetanhydrid,
0,05 g Magnesiumacetat (wasserfrei) und
0,05 g Germaniumdioxid

Unter Rühren wurde die Suspension mit einem Salzbad auf 170°C erhitzt, wobei ständig ein leichter Stickstoffstrom übergeleitet wurde. Die bei dieser Temperatur beginnende Destillation von Essigsäure wurde über einen Zeitraum von 4 Stunden aufrechterhalten, indem die Temperatur allmählich bis auf 340°C erhöht wurde (113 g Destillat). Zu diesem Zeitpunkt lag das Reaktionsgemisch als klare Schmelze vor. Anschließend wurde im Verlauf einer Stunde der Druck bis auf 20 mbar und innerhalb einer weiteren Stunde bis auf 0,5 mbar gesenkt. Man rührte die Schmelze noch eine Stunde unter diesen Bedingungen und ließ sie dann unter Stickstoff abkühlen. Es wurde ein thermotroper Polyester hellbeiger Farbe erhalten, der die gleichen physikalischen Eigenschaften wie das in Beispiel 1 beschriebene Produkt besaß.

## Patentansprüche

1. Thermotrope Polyester aus aromatischen Dicarbonsäureresten, Diphenolresten, gegebenenfalls Resten von Kettenabbrechern und/oder Verzweigungsmitteln, dadurch gekennzeichnet, daß die Diphenolreste zu mindestens 90 Mol-% der Formel

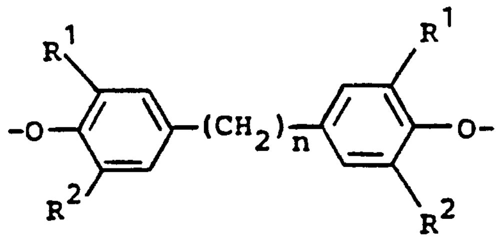

(I)

entsprechen, worin

$R^1$, $R^2$ für Wasserstoff, $C_1$—$C_4$-Alkyl, $C_1$—$C_4$-Alkoxy, Phenyl oder Halogen (vorzugsweise Chlor oder Brom) und

n für eine ganze Zahl von 3 bis 12 stehen.

2. Polyester nach Anspruch 1, dadurch gekennzeichnet, daß die Diphenolreste zu mindestens 95 Mol-% der Formel (I) entsprechen.

3. Polyester nach Ansprüchen 1 und 2, dadurch gekennzeichnet, daß die Diphenolreste zu 100 Mol-% der Formel (I) entsprechen.

4. Polyester nach Ansprüchen 1—3, dadurch gekennzeichnet, daß die aromatischen Dicarbonsäurereste Terephthalsäurephthalsäurereste sind.

5. Polyester nach Ansprüchen 1—4, dadurch gekennzeichnet, daß sie eine Wärmebeständigkeit (nach Vicat B) von mindestens 150°C besitzen.

6. Polyester nach Ansprüchen 1—5, dadurch gekennzeichnet, daß sie bei isothermischer gravimetrischer Analyse nach 30 Minuten bei 350°C einen Gewichtsverlust von höchstens 3 Gew.-% zeigen.

7. Polyester nach Ansprüchen 1—6, dadurch gekennzeichnet, daß sie eine durch DSC bestimmte Temperatur des Übergangs aus der kristallinen in die flüssig-kristalline Phase (Schmelzpunkt) von weniger als 370°C besitzen.

8. Verfahren zur Herstellung der Polyester nach Ansprüchen 1—7, dadurch gekennzeichnet, daß man die Diphenoldiacetate mit den Dicarbonsäuren sowie gegebenenfalls Verzweigungsmitteln und gegebenenfalls Kettenabbrechern bei Temperaturen von 160 bis 370°C, gegebenenfalls in Gegenwart von Katalysatoren und gegebenenfalls unter vermindertem Druck umsetzt.

9. Verfahren zur Herstellung der Polyester nach Ansprüchen 1—7, dadurch gekennzeichnet, daß man die Dicarbonsäurediphenylester mit den Diphenolen bei Temperaturen von 250 bis 370°C und einem Druck von 0.1 bis 1000 mbar umsetzt.

10. Verwendung der Polyester nach Ansprüchen 1—7 zur Herstellung von Formkörpern, Filamenten, Fasern und Filmen.

**Revendications**

1. Polyesters thermotropes formés de restes d'acides dicarboxyliques aromatiques, de restes de diphénols, le cas échéant de restes d'agents de terminaison de chaîne et/ou d'agents de ramification, caractérisés en ce que les restes de diphénols correspondent, en proportion d'au moins 90 moles %, à la formule

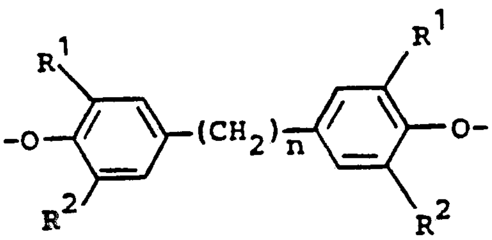

(I)

dans laquelle

$R^1$, $R^2$ représentent de l'hydrogène, un groupe alkyle en $C_1$ à $C_4$, alkoxy en $C_1$ à $C_4$, phényle ou un halogène (de préférence le chlore ou le brome) et

*n* est un nombre entier ayant une valeur de 3 à 12.

2. Polyesters suivant la revendication 1, caractérisés en ce que les restes de diphénols correspondent en proportion d'au moins 95 moles % à la formule (I).

3. Polyesters suivant les revendications 1 et 2, caractérisés en ce que les restes de diphénols correspondent en proportion de 100 moles % à la formule (I).

4. Polyesters suivant les revendications 1 à 3, caractérisés en ce que les restes d'acides dicarboxyliques aromatiques sont des restes d'acide téréphtalique.

5. Polyesters suivant les revendications 1 à 4, caractérisés en ce qu'ils possèdant une température de déformation à chaud (selon Vicat B) d'au moins 150°C.

6. Polyesters suivant les revendications 1 à 5, caractérisés en ce qu'ils montrent à l'analyse gravimétrique isothermique, après 30 minutes à 350°C, une perte de poids au maximum égale à 3% en poids.

7. Polyesters suivant les revendications 1 à 6, caractérisés en ce qu'ils possèdent une température, déterminée par analyse calorimétrique différentielle, de passage de la phase cristalline à la phase cristalline liquide (point de fusion) de moins de 370°C.

8. Procédé de production des polyesters suivant les revendications 1 à 7, caractérisé en ce qu'on fait réagir les diacétates de diphénols avec les acides dicarboxyliques ainsi que, le cas échéant, avec des agents deramification et, le cas échéant, des agents de terminaison de chaîne à des températures de 160 à 370°C, le cas échéant en présence de catalyseurs et en opérant éventurellement sous pression réduite.

9. Procédé de production des polyesters suivant les revendications 1 à 7, caractérisé en ce qu'on fait réagir les esters diphényliques d'acides dicarboxyliques avec les diphénols à des températures de 250 à 370°C et à une pression de 0,1 à 1000 mbars.

10. Utilisation des polyesters suivant les revendications 1 à 7 pour la fabrication de pièces moulées, de filaments, de fibres et de films.

**Claims**

1. Thermotropic polyesters of aromatic dicarboxylic acid residues, diphenol residues, optionally residues of chain terminators and/or branching agents, characterized in that at least 90 mol-% of the diphenol residues correspond to the following formula

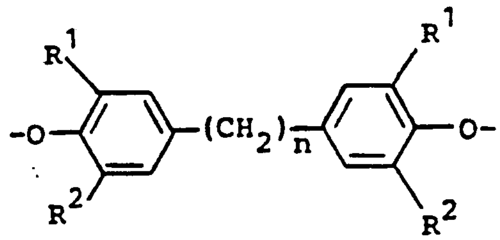

(I)

in which

$R^1$, $R^2$ represent hydrogen, $C_1$—$C_4$ alkyl, $C_1$—$C_4$ alkoxy, phenyl or halogen (preferably chlorine or bromine) and

n is an integer of 3 to 12.

2. Polyesters as claimed in claim 1, characterized in that at least 95 mol-% of the diphenol residues correspond to formula (I).

3. Polyesters as claimed in claims 1 and 2, characterized in that 100 mol-% of the diphenol residues correspond to formula (I).

4. Polyesters as claimed in claims 1 to 3, characterized in that the aromatic dicarboxylic acid residues are terephthalic acid residues.

5. Polyesters as claimed in claims 1 to 4, characterized in that they have a softening point (Vicat B) of at least 150°C.

6. Polyesters as claimed in claims 1 to 5, characterized in that, according to the thermogravimetric analysis, they show a weight loss of at most 3% by weight after 30 minutes at 350°C.

7. Polyesters as claimed in claims 1 to 6, characterized in that they have a transition temperature from the crystalline to the liquid crystalline phase (melting point), as determined by DSC, of less than 370°C.

8. A process for the production of the polyesters claimed in claims 1 to 7, characterized in that the diphenol diacetates are reacted with the dicarboxylic acids and, optionally, branching agents and, optionally, chain terminators at temperatures of 160 to 370°C, optionally in the presence of catalysts and optionally under reduced pressure.

9. A process for the production of the polyesters claimed in claims 1 to 7, characterized in that the diphenol esters are reacted with the diphenols at temperatures of 250 to 370°C and under a pressure of 0.1 to 1000 mbar.

10. The use of the polyesters claimed in claims 1 to 7 for the production of mouldings, filaments, fibers and films.